# EUROPÄISCHE PATENTSCHRIFT

(11) **EP 0 813 348 B1**
(45) Veröffentlichungstag und Bekanntmachung des Hinweises auf die Patenterteilung: **08.02.2006**
(21) Anmeldenummer: 97108956.0
(22) Anmeldetag: 03.06.1997
(51) Int. Cl.: H04Q 9/00

(54) **Ferngesteurte Messanordnung und Verfahren zum ferngesteuerten Betrieb mehrerer Messstellen**
Remote controlled measuring device and method for remotely operating a plurality of measuring points
Dispositif de mesure télécommande et méthode d'opération à distance de plusieurs points de mesure

(30) Priorität: 12.06.1996 DE 19623546
(43) Veröffentlichungstag der Anmeldung: 17.12.1997
(73) Patentinhaber: WTW Wissenschaftlich-Technische Werkstätten GmbH & Co. KG, 82362 Weilheim (DE)
(72) Erfinder: Platzek, Josef, 81929 München (DE); Rettig, Ulrich, 82407 Wielenbach (DE)
(74) Vertreter: Wahl, Hendrik

(56) Entgegenhaltungen:
- EP-A- 0 180 423
- EP-A- 0 200 447
- EP-A- 0 361 585
- FR-A- 2 696 065
- US-A- 5 417 222
- PROCEEDINGS OF THE INSTRUMENTATION AND MEASUREMENT TECHNOLOGY CONFERENCE, ORVINE, CA., MAY 18 - 20, 1993, Nr. -, 18.Mai 1993, INSTITUTE OF ELECTRICAL AND ELECTRONICS ENGINEERS, Seiten 715-720, XP000400263 YUCHENG JIN ET AL: "A PIPELINED AUTOMATIC METER READING SCHEME"

## Beschreibung

Die vorliegende Erfindung betrifft eine ferngesteuerte Meßanordnung, umfassend mehrere separate Meßstellen, die mit einer zentralen Steuerung drahtlos kommunizieren. Weiterhin betrifft die Erfindung ein Verfahren zum Betrieb einer derartigen Meßanordnung.

Meßanordnungen umfassen heutzutage eine größere Anzahl an Meßstellen, die von einer zentralen Steuerung aus gesteuert werden. Damit die zentrale Steuerung eine Meßstelle steuern kann, muß die Meßstelle bei der Steuereinheit deklariert, d.h. die Zuordnung der Meßstellenkennung zur Anwendung (Probe) muß dem System mitgeteilt werden. Oft sind diese Meßstellenkennungen als feste Adresse an jeder Meßstelle eingestellt. Für die Mitteilung der Probenzuordnung ist es dann notwendig, manuell oder über einen Barcodeleser die Kennung der Meßstelle in Verbindung mit der Anwendung der Steuereinheit mitzuteilen. Dieses Verfahren ist zum einen relativ umständlich und birgt des weiteren die Gefahr, daß bei der manuellen Eingabe Fehler gemacht werden. Es können sich auch Barcodes von den Meßstellen ablösen und anschließend verwechselt wieder an den Meßstellen befestigt werden. In all diesen Fällen erfolgt eine falsche Probenzuordnung der Meßstelle, woraus anschließend Meßergebnisse falsch gedeutet werden.

Die FR 2 696 065 A1 zeigt ein System, bei welchem eine drahtlose Datenübertragung zwischen einer Zentraistation und mehreren Messstellen vorgesehen ist. Die Kennungsdaten der einzelnen Messstellen werden hierbei über DIP-Schalter eingestellt.

Die US-A 5,417,222 zeigt eine Vorrichtung zur Patientenüberwachung bei der Patientendaten über Fernübertragungsstelle mit einem portablen Rechner verbindbar ist.

Es ist Ziel der vorliegenden Erfindung, eine Meßanordnung und ein Verfahren zum Betreiben einer Meßanordnung bereitzustellen, die eine absolut sichere Anwendungs/Meßstellenzuordnung gewährleisten und eine weitgehend automatisierte Steuerung vieler Meßstellen auch mit unterschiedlichen Anwendungen und mit weitgehend automatisierter Probenverwaltung und -auswertung ermöglicht und keine Inbetriebnahme bzw. Konfiguration des Meßsystems benötigt.

Diese Aufgabe wird durch eine Meßanordnung des Anspruchs 1 und durch ein Verfahren gemäß Anspruch 12 gelöst. Vorteilhafte Weiterbildungen der Erfindung sind Gegenstand der entsprechenden Unteransprüche.

Erfindungsgemäß werden zwei unterschiedliche Arten von Datenübertragung vorgesehen. Eine erste Art der Datenübertragung findet zwischen einem Datenübertragungsgerät und jeder einzelnen Meßstelle statt, wobei diese Übertragung eine enge physische Beziehung zwischen dem Datenübertragungsgerät und der Meßstelle erfordert. Im Rahmen dieser Datenübertragung findet eine Zuordnung oder Identifikation der Meßstelle statt. So wird eine anonyme Meßstelle z.B. durch die zentrale Steuerung mit einer Kennung versehen und/oder eine z.B. während der Produktion eingeprägtes Merkmal, Kennung oder Identifikation (Seriennummer) wird von der Steuerung gelesen, wobei die Zuordnung später im Rahmen der Anwendung erfolgt.

Anschließend wird eine zweite Art der Datenübertragung zwischen einer zentralen Steuerung und jeder Meßstelle vorgesehen, wobei diese Datenübertragung ohne eine engere physische Beziehung zwischen der Sende/Empfangseinrichtung der zentralen Steuerung und der Meßstelle realisiert wird. Im Rahmen dieser zweiten Datenübertragung werden Meßdaten, Steuerdaten und gegebenenfalls Konfigurationsdaten übertragen. Durch diese Arbeitsweise der Meßanordnung kann die Kennung probenspezifisch vergeben werden, d.h. es können Kennungen vergeben bzw. zugeordnet werden, die einen Bezug zur Anwendung haben. Weiterhin ermöglicht die Meßanordnung eine Probenverwaltung und Dokumentation ohne aufwendige Editiervorgänge.

Erfindungsgemäß erfolgt die Zuordnung einer Meßstelle zu einer Anwendung nicht mehr systemorientiert, sondern anwendungsorientiert. Dies bedeutet, daß vor der Messung die Meßstellen noch keine Kennung aufweisen müssen. Um den Meßstellen eine Kennung zuzuordnen und/oder eine Kennung zu übernehmen, die bei der Produktion der Geräte bereits eingeprägt wurde, ist es nötig, daß man das, z.B. mobile, Datenübertragungsgerät an die Meßstelle heranführt, so daß der definierte physische Kontakt oder die definierte physische Beziehung zwischen dem Datenübertragungsgerät und der Meßstelle entsteht. Nur diese definierte physische Beziehung erlaubt einen Datentransfer zwischen Datenübertragungsgerät und der Meßstelle. Im Rahmen dieser Datenübertragung, die gleichzeitig jeweils nur mit einer einzelnen Meßstelle funktionieren darf, werden Kennungsinformationen ausgetauscht und zugeordnet. Da diese Zuordnung anwendungsorientiert erfolgt, entfällt das manuell Arbeiten bzw. Zuordnen mit/von systembezogenen Kennungsdaten, die mit der Logik der Probenauswahl bzw. Anwendung nichts zu tun haben. Man kann nun jede Meßstelle für eine beliebige Anwendung verwenden, wobei erst mit der Datenübertragung über das Datenübertragungsgerät eine Kennungsvergabe erfolgt, die dann probenbezogen sein kann. Auf diese Weise können logische Meßstellenbezeichnungen verwendet werden, wie z.B. Ox1, Ox2, Ox3 etc. bei Sauerstoffmessung und Stick1, Stick2, Stick3 etc. bei Stickstoffmessung. Die Kennungen können Stoffe, Entnahmeorte und Konzentrationen und/oder andere Parameter enthalten. Nachdem eine beliebige Anzahl von Meßstellen auf die obige Weise mit einer Kennung versehen worden ist, können diese Meßstellen separat, gemeinsam oder in festgelegten Gruppen durch eine zentrale Steuerung angesprochen werden, wobei die Datenübertragung zwischen der zentralen Steuerung und den einzelnen Meßstellen im Gegensatz zur Kennungszuordnung einer Meßstelle nicht an eine bestimmte physische Bedingung zwischen der zentralen Steuerung und der Meßstelle geknüpft ist. Bei der Verwendung einer IR-Datenübertragung kann z.B. eine Infrarot-Sende/Empfangseinheit der zentralen Steuerung außerhalb der Glastür eines Klimaschranks angeordnet sein, während sich die Anwendungen im Inneren des Schrankes befinden. Bei Verwendung einer Funkeinrichtung kann sich an einer beliebigen Stelle im Zimmer oder im Gebäude eine entsprechende Sende-/Empfangseinrichtung befinden. Wesentlich ist, daß nur derartige Meßstellen angesprochen werden, die vorher im Rahmen einer Kennungszuordnung mit einer Kennung versehen worden sind, bzw. deren Kennung in die Steuerung eingelesen wurden. Diese Kennung dient der zentralen Steuerung als Ansprechadressen für alle nachfolgenden Datenübertragungsvorgänge.

Im Rahmen der Datenübertragung zwischen der zentralen Steuerung und den Meßstellen können unterschiedliche Arten von Daten übertragen werden.
1) Gruppenzugehörigkeitsdaten, die einer Meßstelle mit einer bestimmten Kennung mitteilen, daß diese Anwendung einer bestimmten Gruppe zugehört. Durch eine derartige Zuordnung einer Gruppen-adresse können gezielt mehrere Meßstellen in der Meßanordnung gleichzeitig angesprochen werden.
2) Steuerdaten, die dazu dienen, der Meßstelle den Zeitpunkt und/oder die Art bzw. Parameter einer Messung bzw. eines Meßprogramms mitzuteilen. Hier gibt es unterschiedliche Möglichkeiten. Im Falle der Verwendung sehr einfach aufgebauter Meßstellen können die Meßstellen z.B. für jeden Meßvorgang von der zentralen Steuerung eingeschaltet werden, worauf diese eine Messung durchführen und das Meßergebnis an die zentrale Steuerung weiterleiten. Anschließend kann die Meßstelle entweder durch die zentrale Steuerung oder intern wieder in einen Stand-by-Betrieb zurückversetzt werden, in welchem die Meßstelle sehr wenig Strom verbraucht.

In einer anderen Ausführungsform kann ein komplettes Meßprogramm durch die zentrale Steuerung an eine Meßstelle übertragen werden, in welchem Fall die Meßstelle das Meßprogramm selbsttätig ohne weiteres Zutun der Steuerung abarbeitet. In diesem Fall ist selbstverständlich ein zeitgeber, z.B. eine Taktquelle in der Meßstelle notwendig, so daß die Meßstelle zeitliche Zuordnungen treffen kann. Die letzte Alternative ermöglicht den Meßstellen ein von der zentralen Steuerung losgelöstes unabhängigeres Arbeiten, während diese Alternative andererseits mit einem höheren Hardwareaufwand an der Meßstelle selbst verbunden ist. So erfordert diese Lösung eine intelligentere Mikroprozessorsteuerung mit mehreren Speichern und einer Steuerungslogik, während die erste Alternative lediglich eine sehr einfache Steuerung mit sehr wenig Speicherplätzen benötigt, was sich wiederum günstig auf den Energieverbrauch auswirkt.

Vorzugsweise wird eine Datenübertragung durch die Meßstelle quittiert. Dies kann durch Abgabe eines optischen (Display) oder akustischen Quittungssignals erfolgen oder durch die Absendung eines Quittungsdatensatzes. Auf diese Weise kann sichergestellt werden, daß die zu übertragenden Daten von der Meßstelle empfangen bzw. verarbeitet wurden.

In diesem Zusammenhang wird darauf hingewiesen, daß die Meßstellen in der Regel batterie- oder akkumulatorbetrieben arbeiten. Ein wichtiges Erfordernis des Betriebs der Meßanordnung besteht also darin, daß die Meßstellen sowenig Strom wie möglich verbrauchen, um ein häufigeres Nachladen der Akkumulatoren bzw. Auswechseln der Batterien zu vermeiden.

Eine dritte Datenart, die zwischen der zentralen Steuerung und den Meßstellen zu übertragen ist, sind Meßdaten, die von den Meßstellen im Verlauf von Messungen generiert werden. Zu diesen Daten können auch Daten über den Zustand der Meßstellen-Internstromversorgung gehören, so daß man z.B. vor Beginn einer Messung überprüfen kann, ob die Meßstelle in der Lage ist, mit dem aktuellen Batterie- oder Akkumulatorzustand die Messung ohne Unterbrechung bis zum Ende durchzuführen.

In jedem Fall ist die Probenzuordnung durch die definierte Kennungszuordnung eindeutig und alle zugeordneten Meßstellen können ohne weiteren manuellen Zugriff mit notwendigen Steuerungsdaten versorgt werden, bzw. erhaltene Meßergebnisse können von der zentralen Steuerung ohne einen manuellen Zugriff auf die jeweilige Meßstelle abgefragt werden. Die erfindungsgemäße Meßanordnung bzw. das erfindungsgemäße Verfahren erlauben eine lückenlose Dokumentation der Messungen und der Meßergebnisse in Verbindung mit beliebigen statistischen Auswertungen, die aufgrund der unbegrenzten Hardwaremöglichkeiten der zentralen Steuerung gegeben sind. Ein fehlerbehafteter manueller Zuordnungsvorgang, wie er bei geltenden Systemen existiert, kann somit entfallen. Es ist daher nicht notwendig, den Meßkopf mit der Bezeichnung, z.B. E 07 B der Anwendung Klärbecken 1 zuzuordnen, sondern die Meßstelle kann gleich mit der Kennung "Klärbecken 1" versehen werden.

Die Gruppenzuordnung bestimmter Meßstellen kann auf zwei unterschiedliche Arten realisiert werden. Zum einen kann die Definition der Gruppe in der zentralen Steuerung gespeichert werden, so daß, wenn die gesamte Gruppe angesprochen werden soll, die Steuerung die der Gruppe zugehörenden Einzelkennungen aufruft. In einem anderen Verfahren existiert an jeder Meßstelle ein Speicher für eine Gruppenadresse, in welchem Fall die zentrale Steuerung lediglich vor der Datenübertragung die Gruppenadresse sendet, in welchem Fall jede Meßstelle mit der gleichen Adresse angesprochen wird. Dies läßt sich durch einen einfachen Vergleich des empfangenen Gruppenadressignals mit dem im Speicher befindlichen Gruppenadressignal ermitteln. Das Gruppenadresssignal kann der Meßstelle im Rahmen von Konfigurationsdatenübermittlungen vorher von der zentralen Steuerung zugeteilt worden sein.

Die zentrale Steuerung kann in einer vorteilhaften Weiterbildung der Erfindung zur Abgabe eines Schaltsignals ausgebildet sein, welches wahlweise auch von Meßstellen empfangen wird, die noch nicht mit einer Kennung versehen sind. Durch dieses Schaltsignal wird die Meßstelle von einem stromsparenden Stand-by-Betrieb in einen aktiven Zustand geschaltet. Es ist selbstverständlich möglich, dieses zentrale Signal auch zum Abschalten oder zum Schalten in den Stand-by-Betrieb einer Meßstelle zu verwenden.

Durch die vorliegende Erfindung wird ein Mehrstellen-Meßsystem geschaffen, welches ohne Systemkonfigurationstätigkeiten durch den Nutzer in Betrieb genommen werden kann. Es lassen sich mit der Meßanordnung und dem Verfahren eine Probenverwaltung und Probendokumentation ohne Editiervorgänge auf Geräte oder Meßprotokolle durchführen, wodurch sich eine Probenverwaltung und Probendokumentation auch bei einer sehr großen Anzahl von Meßstellen sicher, schnell und mühelos durchführen läßt. Durch die unterschiedlichen Aktivitätsstufen wie z.B. den Stand-by- bzw. den Meß-Stand-By-Betrieb lassen sich die Meßstellen mit äußerst wenig Energie betreiben. Daher können akkumulator- und batteriebetriebene Meßköpfe verwendet werden, die einfach auf Probenbehälter aufgeschraubt oder anderweitig befestigt werden. Diese Meßstellen benötigen daher weder eine externe Energieversorgung noch eine physische Ankopplung für die Datenübertragung.

Für die Datenübertragung wird vorzugsweise eine modulierte Infrarotlicht-Übertragung verwendet, wodurch Fremdlichteffekte weitestgehend ausgeschaltet werden können.

Vorzugsweise wird für die Übertragung vom Datenübertragungsgerät auf die Meßstelle die gleiche Fernübertragungsart gewählt, wie für die Übertragung von der zentralen Steuerung zu den Meßstellen und umgekehrt. Die physische Beziehung zwischen Datenübertragungsgerät und Meßstelle kann durch geeignet ausgebildete komplementäre Kontaktflächen sichergestellt werden. Die Kontaktfläche der Meßstelle muß für einen Sende-/Empfangskopf des Datenübertragungsgeräts leicht zugänglich sein. Die Kontaktflächen können so ausgebildet sein, daß kein Infrarotlicht bzw. keine Funkwellen zwischen den Kontaktstellen der Meßstelle und des Datenübertragungsgerätes nach außen zu anderen Meßstellen gelangen. Die Wirkung in einem nur begrenzten Bereich kann bei dem Datenübertragungsgerät weiterhin dadurch realisiert werden, daß ein Infrarot- bzw. Funksender mit einer nur ganz geringen Sendeleistung verwendet wird, dessen Reichweite z.B. 3 cm nicht überschreitet.

Im Gegensatz dazu kann für die zentrale Steuerung eine Sende/Empfangseinheit verwendet werden, welche eine relativ hohe Sendeleistung aufweist, so daß alle mit einer Kennung versehenen Meßstellen, bzw. für das Einschaltsignal auch die nicht mit einer Kennung versehenen Meßstellen erreicht werden.

Die Überprüfung des empfangenen Signals durch die Meßstellensteuerung kann vorzugsweise mittels geläufiger Komparatoren realisiert werden, die bestimmte Daten des empfangenen Signals, z.B. das Kennungssignal oder ein Gruppenzugehörigkeitssignal mit den entsprechenden Speicherinhalten in der Meßstellensteuerung vergleichen. Im Falle eines positiven Vergleichsergebnisses wird die Meßstelle entsprechend den darauffolgenden empfangenen Steuerdaten betätigt.

Es ist weiterhin möglich, daß die Meßstellen von sich aus ein Wartungssignal an die zentrale Steuerung übermitteln, wenn eine meßstelleninterne Prüfschaltung eine fehlerhafte Funktion einzelner Teile der Meßstellensteuerung feststellt, z.B. eine fehlerhafte Funktion des Meßsensors, wie z.B. eines Drucksensors oder eines Gaspartialdrucksensors oder wenn die Batterie- bzw. Akkumulatorspannung unter einen bestimmten Wert abfällt.

Auf diese Weise kann zusätzlich sichergestellt werden, daß die Meßstellen der Meßanordnung zufriedenstellend arbeiten.

Vorzugsweise werden vor der Kennungszuordnung alle Meßstellen durch ein von der zentralen Steuerung abgegebenes Schaltsignal (Alle-Ruf) vom ausgeschalteten Zustand oder Stand-by-Betrieb in den aktiven Zustand geschaltet. Danach erfolgt durch das Datenübertragungsgerät die Kennungszuordnung in einem Einzel-Ruf, worauf die Meßstellen selektiv oder gruppenweise durch den Kennungs-Ruf von der zentralen Steuerung angesprochen werden können.

## Patentansprüche

1. Ferngesteuerte Meßanordnung umfassend mehrere separate Meßstellen, die mit einer zentralen Steuerung drahtlos kommunizieren,
**dadurch gekennzeichnet, dass** die Meßanordnung konzipiert ist für die drahtlose Datenübertragung mit zwei unterschiedlichen Fernübertragungsmechanismen, wofür sie folgende Komponenten aufweist:
a) ein zur Übertragung von Kennungsdaten zu bzw. von einzelnen Meßstellen vorgesehenes Datenübertragungsgerät mit einer Übertragungsschnittstelle, die derart ausgebildet ist, dass eine drahtlose Datenübertragung zwischen dem Datenübertragungsgerät und einer Meßstelle für die Übertragung der Kennungsdaten eine enge physische Beziehung des Datenübertragungsgeräts zu der Meßstelle erfordert, und
b) eine mit der zentralen Steuerung verbundene Sende/Empfangseinrichtung, welche zur drahtlosen Datenübertragung ohne eine engere physische Beziehung zwischen der Sende/Empfangseinrichtung und bereits mit einer Kennung versehenen Meßstellen ausgebildet ist, um Meßdaten, Steuerdaten und gegebenenfalls Konfigurationsdaten zu übertragen.

2. Meßanordnung nach Anspruch 1,
**dadurch gekennzeichnet,**
**daß** eine Meßstellensteuerung über eine Erkennungseinrichtung für ein empfangenes Schaltsignal verfügt, welche Erkennungseinrichtung auch bei noch nicht mit einer Kennung versehenen Meßstellen ständig aktiviert ist.

3. Meßanordnung nach Anspruch 2,
**dadurch gekennzeichnet,**
**daß** eine Meßstellensteuerung nach dem Erkennen des Schaltsignals eine Schalteinrichtung betätigt, die die Meßstelle von einem Stand-by Zustand, in dem lediglich die Sende/Empfangseinrichtung der Meßstelle und korrespondierende Teile der Steuerung und gegebenenfalls deren Speicher aktiviert sind, in einen aktiven Zustand schaltet.

4. Meßanordnung nach Anspruch 1,2 oder 3,
**dadurch gekennzeichnet,**
**daß** jede Meßstelle über eine Bestätigungseinrichtung verfügt, die das erfolgreiche Zuteilen einer Kennung quittiert.

5. Meßanordnung nach Anspruch 4,
**dadurch gekennzeichnet,**
**daß** die Bestätigungseinrichtung ein Display für die Kennung umfaßt.

6. Meßanordnung nach einem der vorhergehenden Ansprüche,
**dadurch gekennzeichnet,**
**daß** die Meßstellen einen Speicher für Gruppenzugehörigkeitsdaten enthalten,
wobei die Meßstellensteuerung zum Empfang von Steuerdaten aktiviert wird, wenn in einem empfangenen Signal Daten enthalten sind, die zu den gespeicherten Gruppenzugehörigkeitsdaten korrespondieren.

7. Meßanordnung nach einem der vorhergehenden Ansprüche,
**dadurch gekennzeichnet,**
**daß** die Steuerung, das Datenübertragungsgerät und die Steuerung eine IR- oder Funk-Sende/Empfangseinrichtung zur bidirektionalen Datenübertragung aufweisen.

8. Meßanordnung nach einem der vorhergehenden Ansprüche,
**dadurch gekennzeichnet,**
**daß** jede Meßstelle eine Steuerung und einen Speicher für Konfigurations-, Kennungs- und Meßdaten aufweist.

9. Meßanordnung nach einem der vorhergehenden Ansprüche,
**dadurch gekennzeichnet ,**
**daß** jede Meßstelle ein Zeitelement, z.B. eine Taktquelle aufweist.

10. Meßanordnung nach einem der vorhergehenden Ansprüche,
**dadurch gekennzeichnet,**
**daß** das Datenübertragungsgerät als mobiles Programmiergerät ausgebildet ist, welches eine Schnittstelle zur Verbindung mit der zentralen Steuerung aufweist.

11. Meßanordnung nach Anspruch 10,
**dadurch gekennzeichnet,**
**daß** die Schnittstelle für die Verbindung mit der zentralen Steuerung die Sende/Empfangseinrichtung für die Datenübertragung mit einer Meßstelle ist.

12. Verfahren zum ferngesteuerten Betrieb mehrerer separater Meßstellen, die mit einer zentralen Steuerung drahtlos kommunizieren,
**dadurch gekennzeichnet,**
**dass** zwei unterschiedliche drahtlose Datenübertragungsarten zur Datenübertragung unterschiedlicher Daten verwendet werden, derart dass
a) jeweils eine einzelnen Meßstelle mittels eines Datenübertragungsgeräts mit einer Kennung versehen wird, wobei die drahtlose Datenübertragung zur Übertragung der Kennungsdaten eine enge physische Beziehung zwischen dem Datenübertragungsgerät und der Meßstelle erfordert, und
b) die zentrale Steuerung mit den bereits mit einer Kennung versehenen Meßstellen kommuniziert, wobei Meßdaten, Steuerdaten und gegebenenfalls Konfigurationsdaten ohne eine engere physische Beziehung zwischen der Steuerung und den Meßstellen übertragen werden.

13. Verfahren nach Anspruch 12,
**dadurch gekennzeichnet,**
**daß** die zentrale Steuerung oder das Datenübertragungsgerät eine/die Meßstelle/n vor dem Zuteilen einer Kennung von einem Stand-by Zustand, in dem lediglich die Sende/Empfangseinrichtung der Meßstelle und korrespondierende Teile der Steuerung und gegebenenfalls deren Speicher aktiviert sind, in einen aktiven Zustand schaltet.

14. Verfahren nach Anspruch 12 oder 13,
**dadurch gekennzeichnet,**
**daß** das Zuteilen einer Kennung und/oder der Empfang von Steuerdaten von der Meßstelle quittiert wird/werden.

15. Verfahren nach einem der Ansprüche 12 bis 14,
**dadurch gekennzeichnet,**
**daß** jeder Meßvorgang einer Meßstelle von der zentralen Steuerung initiiert wird, wonach die Meßstelle wieder in den Stand-by Betrieb zurückgesetzt wird.

16. Verfahren nach einem der Ansprüche 12 bis 14,
**dadurch gekennzeichnet,**
**daß** einer Meßstelle von der zentralen Steuerung ein Meßprogramm übermittelt wird, woraufhin eine Steuerung der Meßstelle einen internen Taktgeber startet, der mehrere Messungen zu programmierten Zeiten ausführt und dazwischen in einen Meß-Stand-by-Betrieb zurückfällt, in dem lediglich Teile der Steuerung, der Taktgeber, ein Meßwertspeicher und gegebenenfalls die Sende/Empfangseinrichtung aktiviert sind.

17. Verfahren nach Anspruch 16,
**dadurch gekennzeichnet,**
**daß** die Meßstellensteuerung nach dem Abarbeiten eines Meßprogramms entweder die Meßdaten an die zentrale Steuerung übermittelt und abgeschaltet oder in den Stand-by Betrieb geschaltet wird.

18. Verfahren nach einem der Ansprüche 12 bis 17,
**dadurch gekennzeichnet,**
**daß** Gruppen von mit einer Kennung versehenen Meßstellen in der zentralen Steuerung oder im Rahmen der Konfiguration der Meßstellen festgelegt werden, welche Gruppen bei einer anschließenden Übertragung von Steuer und/oder Konfigurationsdaten gemeinsam angesprochen werden.

## Revendications

1. Dispositif de mesure télécommandé comprenant plusieurs postes de mesure séparés qui communiquent sans fil avec une unité de commande centrale,
**caractérisé en ce que** le dispositif de mesure est conçu pour la transmission de données sans fil avec deux mécanismes de transmission à distance différents, pour lesquels ledit dispositif présente les composants suivant :
a) un appareil de transmission de données prévu à la transmission de données caractéristiques vers différents postes de mesure, respectivement avec une interface de transmission qui est formée de manière à ce qu'une transmission de données sans fil entre l'appareil de transmission de données et un poste de mesure pour la transmission de données caractéristiques nécessite une relation physique étroite de l'appareil de transmission de données vers le poste de mesure, et
b) un dispositif d'émission / réception relié à l'unité de commande centrale qui est formé pour la transmission de données sans fil sans relation physique étroite entre le dispositif d'émission / réception et en connaissant déjà les postes de mesure pourvus d'une identification afin de transmettre les données de mesure, les données de commande et si besoin est, les données de configuration.

2. Dispositif de mesure selon la revendication 1,
**caractérisé en ce que**,
une unité de commande des postes de mesure dispose d'un dispositif de reconnaissance pour un signal de commutation reçu, lequel dispositif de reconnaissance est constamment activé même lors de postes de mesure non encore pourvus d'un marquage.

3. Dispositif de mesure selon la revendication 2,
**caractérisé en ce que**,
une unité de commande de postes de mesure actionne un dispositif de commutation après la reconnaissance du signal de commutation, lequel dispositif de commutation commute dans un état actif le poste de mesure d'un état de stand-by dans lequel le dispositif d'émission / réception du poste de mesure et les parties correspondantes de l'unité de commande ainsi que leurs mémoires si besoin est, sont activées.

4. Dispositif de mesure selon la revendication 1, 2 ou 3,
**caractérisé en ce que**,
chaque poste de mesure dispose d'un dispositif d'actionnement qui confirme l'attribution réussie d'un marquage.

5. Dispositif de mesure selon la revendication 4,
**caractérisé en ce que**,
le dispositif d'actionnement comprend un affichage pour le marquage.

6. Dispositif selon une des revendications précédentes,
**caractérisé en ce que**,
les postes de mesure comprennent une mémoire pour les données d'appartenance de groupe; l'unité de commande des postes de mesure étant activée pour recevoir les données de commande lorsque des données sont comprises dans un signal reçu ; lesdites données correspondant aux données d'appartenance de groupe stockées.

7. Dispositif de mesure selon une des revendications précédentes,
**caractérisé en ce que**,
l'unité de commande, l'appareil de transmission de données et l'unité de commande présentent un dispositif d'émission/réception IR ou d'ondes radio.

8. Dispositif selon une des revendications précédentes,
**caractérisé en ce que**,
chaque poste de mesure présente une unité de commande et une mémoire pour des données de configuration, de marquage et de mesure.

9. Dispositif de mesure selon une des revendications précédentes,
**caractérisé en ce que**,
chaque poste de mesure présente un élément temporel, par exemple, une source de synchronisation.

10. Dispositif de mesure selon une des revendications précédentes,
**caractérisé en ce que**,
l'appareil de transmission de données est formé en tant qu'appareil de programmation mobile présentant une interface afin d'être relié avec l'unité de commande centrale.

11. Dispositif de mesure selon la revendication 10,
**caractérisé en ce que**,
l'interface est destinée à une liaison avec l'unité de commande centrale et le dispositif d'émission / réception pour la transmission des données avec un poste de mesure.

12. Procédé d'opération à distance de plusieurs postes de mesure séparés communiquant sans fil avec une unité de commande centrale,
**caractérisé en ce que**,
on utilise deux types de transmission de données sans fil différents pour la transmission de données différentes, de manière à ce que :
a) à chaque fois, un poste de mesure soit pourvu au moyen d'un appareil de transmission de données d'un marquage ; la transmission de données sans fil destinée à la transmission des données d'attribution nécessitant une relation physique étroite entre l'appareil de transmission de données et le poste de mesure, et
b) l'unité de commande centrale communique avec les postes de mesure déjà pourvus d'un marquage ; les données de mesure, les données de commande et si besoin est, les données de configuration étant transmises sans une relation physique étroite entre la commande et les postes de mesure.

13. Procédé selon la revendication 12,
**caractérisé en ce que**,
l'unité de commande centrale ou l'appareil de transmission de données commute vers un état actif une/le poste de mesure/s avant l'attribution d'un marquage à partir d'un état de stand-by dans lequel uniquement le dispositif d'émission/réception du poste de mesure et les parties correspondantes de l'unité de commande ainsi que leurs mémoires si besoin est, sont activés.

14. Procédé selon la revendication 12 ou 13,
**caractérisé en ce que** l'attribution d'un marquage et/ou la réception des données de commande est/sont confirmés par le poste de mesure.

15. Procédé selon une des revendications 12 à 14,
**caractérisé en ce que**,
chaque processus de mesure d'un poste de mesure est initialisé par l'unité de commande centrale ; le poste de mesure étant ensuite replacé dans un état de fonctionnement stand-by.

16. Procédé selon une des revendications 12 à 14,
**caractérisé en ce que**,
un programme de mesure est transmis de l'unité de commande centrale à un poste de mesure, à la suite de quoi une commande du poste de mesure met en route une horloge interne qui réalise plusieurs mesures selon des temps programmés et retourne entre-temps dans un fonctionnement de mesure « stand-by », dans lequel seuls des parties de la commande, l'horloge, une mémoire de mesure et si besoin est le dispositif d'émission/réception sont activés.

17. Procédé selon la revendication 16,
**caractérisé en ce que**,
l'unité de commande des postes de mesure soit transmet les données de mesure à l'unité de commande centrale et la met hors service, après l'exécution d'un programme de mesure, ou est commutée vers l'état de fonctionnement stand-by.

18. Procédé selon une des revendications 12 à 17,
**caractérisé en ce que**,
des groupes de postes de mesure pourvus d'un marquage, sont définis dans l'unité de commande centrale ou dans le cadre de la configuration des postes de mesure, lesquels groupes sont activés ensemble lors d'une transmission ultérieure de données de commande et/ou de configuration.

## Claims

1. A remote-controlled measuring arrangement comprising a plurality of measuring points for wireless communication with a central controller, **characterized in that** the measuring arrangement is conceived for wireless data transfer by two different data link mechanisms, the arrangement comprising the following components;
a) a data transfer device provided for transferring marker data to and from each of the measuring points, including a transfer interface configured so that wireless data transfer between the data transfer device and a measuring point requires a close physical relationship of the data transfer device to the measuring point for the transfer of marker data, and
b) connected to the central controller a transponder which is configured for wireless data transfer without a close physical relationship between the transponder and measuring points already provided with a marker for transferring measurement data, control data and, where necessary configuration data.

2. The measuring arrangement as set forth in claim 1, **characterized in that** a measuring point controller is provided for with a detector for a received switch signal, the detector being continuously activated even with measuring points still not featuring a marker.

3. The measuring arrangement as set forth in claim 2, **characterized in that** on detection of the switch signal a measuring point controller activates a switching means which switches the measuring point from a stand-by status, in which only the transponder of the measuring point and corresponding parts of the control, including their memory where involved, are activated, into an active status.

4. The measuring arrangement as set forth in claim 1, 2 or 3, **characterized in that** each measuring point is provided with an acknowledgment device which acknowledges successful allocation of a marker,

5. The measuring arrangement as set forth in claim 4, **characterized in that** the acknowledgment device comprises a display for the marker.

6. The measuring arrangement as set forth in any of the preceding claims, **characterized in that** the measuring points contain a memory for group affiliation data, the measuring point controller being activated to receive control data when in a received signal data are contained which correspond to the memorized group affiliation data.

7. The measuring arrangement as set forth in any of the preceding claims, **characterized in that** the control, the data transfer device and the control comprise an IR or RF transponder for bidirectional data transfer.

8. The measuring arrangement as set forth in any of the preceding claims, **characterized in that** each measuring point comprises a control and a memory for configuration, marker and measurement data.

9. The measuring arrangement as set forth in any of the preceding claims, **characterized in that** each measuring point comprises a timer, e.g. a clock.

10. The measuring arrangement as set forth in any of the preceding claims, **characterized in that** the data transfer device is configured as a mobile programmer comprising an interface for connecting the central controller.

11. The measuring arrangement as set forth in claim 10, **characterized in that** the interface for connecting the central controller is the transponder for data transfer with a measuring point.

12. A method for remote-controlled operation of a plurality of measuring points for wireless communication with a central controller, **characterized in that** two different types of wireless data transfer are used for data transfer of different data, such that;
a) each individual measuring point is provided by means of a data transfer device with a marker, wireless data transfer for transferring the marker data requiring close physical relationship between data transfer device and the measuring point, and
b) the central controller communicating with the measuring points already provided with a marker, measurement data, control data and, where necessary configurational data being transferred without a close physical relationship between the control and the measuring points.

13. The method as set forth in claim 12, **characterized in that** the central controller or the data transfer device switches the measuring point(s) before allocation of a marker from a stand-by status, in which only the transponder of the measuring point and corresponding parts of the control and where necessary their memory are activated, into an active condition.

14. The method as set forth in claim 12 or 13, **characterized in that** allocating a marker and/or receiving control data from the measuring point is/are acknowledged.

15. The method as set forth in any of the claims 12 to 14, **characterized in that** each measurement action of a measuring point is initiated by the central controller, after which the measuring point is reset in the stand-by status.

16. The method as set forth in any of the claims 12 to 14, **characterized in that** a measurement routine is communicated to a measuring point by the central controller, upon which a measuring point controller starts an internal timer which implements a plurality of measurements at programmed points in time and carries out several measurements at programmed times and in between then drops back into a measurement stand-by status, in which only parts of the control, the timer, a measured value memory, and, optionally, the transponder are activated.

17. The method as set forth in claim 16, **characterized in that** after processing a measuring program, the measuring point controller either transmits the measurement data to the central controller and switches off, or is switched to the stand-by status.

18. The method as set forth in any of the claims 12 to 17, **characterized in that** groups of measuring points with a marker are determined in the central controller or in the scope of the configuration of the measuring points, these groups being addressed together in subsequent transfer of control and configuration data.
